# EUROPEAN PATENT APPLICATION

(11) **EP 3 051 481 A1**
(43) Date of publication of application: **03.08.2016**
(21) Application number: 14860370.7
(22) Date of filing: 30.10.2014
(51) Int. Cl.: G06Q 30/02

(54) **USER-PARTICIPATING-TYPE ELECTRONIC ADVERTISEMENT SYSTEM**

(30) Priority: 05.11.2013 JP 2013229189
(71) Applicant: Randido Inc., Tokyo 141-0032 (JP)
(72) Inventor: AMANO, Tomoaki, Tokyo 141-0032 (JP)
(74) Representative: Prüfer & Partner mbB Patentanwälte · Rechtsanwälte
(86) International application number: PCT/JP2014/005499
(87) International publication number: WO 2015/068365

(57) **Abstract**

Provided is a system in which a Web user creates an advertisement to be posted in a Web site.

A server (1) of a central dealer provides an app (8') for editing an advertisement material moving image to a terminal (2) of a Web user (a creator user) 2M who has intention to create the advertisement material moving image. The creator user (2M) edits and creates the advertisement material moving image using the app (8') based on sensitivity or taste of the creator user, and uploads the created advertisement material moving image to the server (1). The uploaded moving image material of each creator user is accumulated in a database (1A) of the server (1). The server (1) creates a series of advertisement moving images suitable to request details of a sponsor (4) using the moving image data of the database (1A), and delivers the advertisement moving image to the Web site desiring the advertisement moving image. A reward (m1) is paid to a provider of the material moving image employed in creating the advertisement moving image, and a publishing fee (m2) is paid to an owner of a Web site (3) where the advertisement is published. When the creation of the advertisement moving image is completed, data on a fee is transmitted from the server (1) to a terminal of the sponsor (4).

## Description

### Technical Field

The present invention relates to a system which is configured to allow a user who is linked to a network system to participate in creating an advertisement in process of creating the advertisement in an information communication network system such as the Internet.

### Background Art

Nowadays, it is well known that various types of advertisements (for example, a banner advertisement) are provided together with the original communication information as a communication network such as the Internet is developed and widely used. As network users (hereinafter, simply referred to as "user" or "Web user" also in the content of the invention) are increased and diversified, such an advertisement providing system is drawing an attention as an attractive field of advertisement and publicity even for a sponsor.

In addition, the capacity and the speed of data transmission are significantly increased and, as a result, the displaying of the advertisement is changed from using a still image to using a moving image. Further, there are provided a lot of advertisements which can strongly draw a user' s attraction. Under such an environment, there are disclosed various inventions as the following Patent Literatures.

### Citation List

### Patent Literature

Patent Literature 1: JP 2008-210304 A
Patent Literature 2: JP 2007-279791 A
Patent Literature 3: JP 2009-268028 A
Patent Literature 4: JP 2008-299472 A

### Summary of Invention

### Technical Problem

The respective inventions in the above Patent Literatures have feature effects as described below.

However, to conclude, there is no invention which directly considers intention and sensitivity of a user who is a receiving side of the advertisement.

The invention of Patent Literature 1 discloses a configuration in which information on a user who receives a community service is acquired as user specific information in order to effectively publish the advertisement to a user participating in the SNS (Social Network Service), and the advertisement corresponding to a specific user is provided based on the information.

Since the invention can associate the user specific information with the providing advertisement, the advertisement can be effectively published to the user who participates in the SNS as described in the object of the invention. However, the advertisement suitable to the user is selected among the advertisements created in advance (that is, the advertisement created based on the intention of a sponsor and an advertisement creator). Therefore, there is a high possibility that an advertisement which directly reflects preference and intention of the user is not contained in selection.

The invention of Patent Literature 2 discloses a configuration in which the sponsor uploads his/her own created advertisement to a dealer to make a self introduction. The invention of Patent Literature 3 discloses a configuration in which the creation of the advertisement moving image is not mentioned but the advertisement is attached when an uploaded moving image is delivered. The invention of Patent Literature 4 discloses a system which uploads a moving image, but the system is provided to improve an image creating technique of an uploader who evaluates an upload image and uploads the image. In addition, the invention of Patent Literature 5 discloses a method through which the image is simply uploaded.

Finally, the inventions of the above Patent Literatures have functional effects for increasing the function and effect of the Web advertisement to some extent for example but, when viewed from an advertisement viewpoint, a common technical object of the inventions is not based on a viewpoint of the Web user who actually watches the advertisement but based on a viewpoint of an advertisement provider. As described below, the present invention has a configuration in which the advertisement is created and provided from a viewpoint of the Web user who is an actual receiving side of the advertisement, and the advertisement causing an extremely high appeal to the Web user can be provided.

### Solution to Problem

The invention has been made to solve the above problems of the techniques in the related art. In other words, the invention relates to a system which is configured to allow a user who is linked to a network system to participate in creating an advertisement in process of creating the advertisement in an information communication network system such as the Internet. The system is established between a sponsor, a Web user who creates and provides an advertisement and an advertisement material (hereinafter, simply referred to as "user"), a Web site in which the advertisement is published, and a central dealer who associates these three parties. More specifically, the invention relates to a system which delivers image/audio information and settlement information established between a terminal such as a personal computer of a user who creates and provides the advertisement and the advertisement material, a server of the Web site, and a server of the central dealer.

More specifically, in the system of a first configuration according to the invention, the server of the central dealer has a function of providing an application software (hereinafter, referred to as "app") for creating the advertisement to the terminal of the user (hereinafter, referred to as "creator user") who creates and provides the advertisement and the advertisement material (the description will be made about an example of the advertisement material even in the following embodiments), and a means for creating a Web advertisement based on data of the advertisement material transmitted from the creator user.

In the system of a second configuration according to the invention, the server of the central dealer has a function of accumulating the advertisement material uploaded by the creator user and creating a series of Web advertisements corresponding to a predetermined sponsor based on the advertisement material.

In the system of a third configuration according to the invention, the server of the central dealer has a function of charging and paying a fee, in which a success reward is paid to the creator user who employs the advertisement material in creating the Web advertisement, an employing reward is paid to a Web manager (owner) who employs the Web advertisement, and a fee for creating the Web advertisement is charged on the sponsor.

### Advantageous Effects of Invention

According to the invention, it is possible to provide an advertisement matched with sensitivity and preference of the Web user (that is, an advertisement causing an extremely high appeal to the Web user).

In other words, in the conventional advertisement including the Web advertisement, the content created based on a sponsor, who is a creator side of the advertisement, and an intention of the sponsor is unilaterally provided to the Web users, viewers, and readers. Therefore, the content is not always matched with the sensitivity and the preference of these receiving sides of the advertisement. In the case of the Web site, since the advertisement is often disregarded or eliminated, the advertisement has not fulfilled the essential function thereof.

On the contrary, in the invention of this application, the Web user is directly involved in the stage of creating the advertisement (thatis, a material created based on the Web user's eye for something and sensitivity is configured as the most important material), the finished advertisement comes to be matched with the sensitivity and the preference of the Web user. Therefore, an attention degree and an appealing property of the advertisement can be significantly increased compared to the conventional advertisement.

In particular, in the Web site as a direct target of the invention, it is said that there is a great gap in generations and a great gap in life styles between the creator side (and the provider) of the advertisement and the receiving side compared to other fields such as newspaper and television. According to the invention, it is possible to bridge the gap to exert the effect of the advertisement at the maximum.

As the other effects of the invention, the advertisement causing a high appeal can be provided continuously. Furthermore, the content of the advertisement is further enhanced in a time sequential manner, and the advertisement causing a high appeal is more likely to be produced in sequence.

The reason is caused by a motivation of the Web user and an increase of the creator users.

In other words, the creator user employed in the advertisement is fully satisfied in widely spreading of his/her own created materials, and may be motivated to create the next material. In addition, as a matter of course, a reward to be received when the material is employed will back up the motivation.

In addition, knowing that, other Web users also try to be a creator users, the base of the creator users is continuously increased and also the providing advertisement materials are increased. As a result, it is expected that a virtuous circle of increasing both quality and quantity of the created Web advertisement is brought.

With the help of an app for creating the advertisement (for example, it is provided from the central dealer for free), the Web user can be the creator user without a specific technique and without a cost. Also for this reason, the base of the creator user can be widened.

As still another effect of the invention, an engine (software) for creating an image installed in the server of the central dealer for creating the Web advertisement can automatically generate the Web advertisement based on a predetermined concept. Therefore, a time taken for creating the Web advertisement can be significantly shortened compared to an advertisement creating process in the related art. In addition, cost and labor required for the advertisement creation can also be reduced.

### Brief Description of Drawings

Fig. 1 is a system diagram of an electronic advertisement system illustrating a first embodiment of the invention.
Fig. 2 is a system diagram of an electronic advertisement system illustrating a second embodiment of the invention.
Fig. 3 is a system diagram of an electronic advertisement system illustrating a third embodiment of the invention.

### Description of Embodiments

### First Embodiment

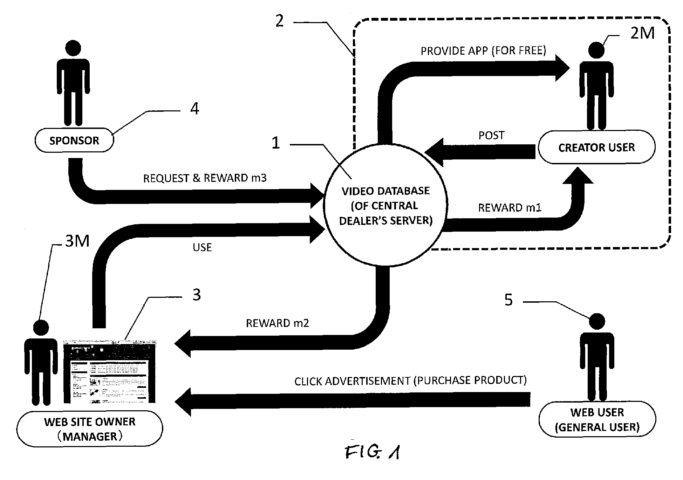

First, a schematic system according to the invention will be described mainly using Fig. 1. Further, a Web advertisement is possibly made even using a still image of course, but in the following embodiments, a moving image will be exemplified.

A computer system 1 in the drawing represents a computer system of a central dealer, and is configured by a plurality of computers or by one computer of high capacity and performance. The entire computer system will be representatively referred to as the term "server" for the convenience of explanation.

A terminal 2 is a personal computer or a mobile terminal which is disposed in a place of a creator user 2M who provides an advertisement material among Web users. In addition, the system is configured by a Web site 3 of the Internet, a manager (owner) 3M of the Web site, a sponsor 4 who wants to post an advertisement in the Web site of the Internet, and a general user 5 who browses the Web site.

Among them, the invention relates particularly to a system established between the server 1 of the central dealer, the terminal 2 of the creator user, a predetermined Web site 3, and the sponsor (specifically, the terminal of the sponsor) 4.

Next, a flow of the system will be schematically described. First, the central dealer allows the terminal 2 of the Web user who wants to be a creator user to download an application (app) for creating an advertisement material from the server 1. As a premise of the downloading, the central dealer and the Web user exchange a contract on requirements such as a reward amount and a payment method at the time when the advertisement is employed, and ownership of the copyright of a moving image of the advertisement material created by the Web user. Further, a providing route of the app may be consigned to a third party who has an app providing system such as Apple (registered trademark) or Google (registered trademark) besides the direct downloading from the server 1.

On the other hand, the sponsor 4 asks the central dealer to create an advertisement concerning products and services (that is, his/her own advertisement target to be commercially advertised). The central dealer extracts the advertisement materials of the creator user which are uploaded and accumulated from the terminal 2 of the creator user, and creates the advertisement suitable to the advertisement target. The Web site owner 3M who wants to display the advertisement accesses the server 1 of the central dealer to select an advertisement which is to be published in the owner's Web site 3. In this case, similarly to the case of the Web user as the creator user, it is assumed that there is established a settlement between the Web site owner 3M and the central dealer about predetermined requirements such as a publishing fee of the advertisement and a payment method.

In the above system, the central dealer pays a reward m1 to the creator user who uploads the advertisement material employed by the central dealer. As a payment methods, various types of methods may be considered such as a fixed-rate method in which the payment amount is fixed, or a variable-rate method in which the payment amount varies in correspondence with the number of clicks on the advertisement of general users 5 or the number of items purchased. In addition, the owner 3M who publishes the advertisement in the Web site 3 is paid a publishing fee m2. The publishing fee m2 is also paid according to the fixed-rate method or the variable-fixed method similarly to the payment method to the creator user.

On the other hand, a predetermined cost m3 is paid to the central dealer from the sponsor 4. The cost m3 is also paid according to the fixed-rate method or the variable-rate method similarly to the costs m1 and m2.

### Second Embodiment

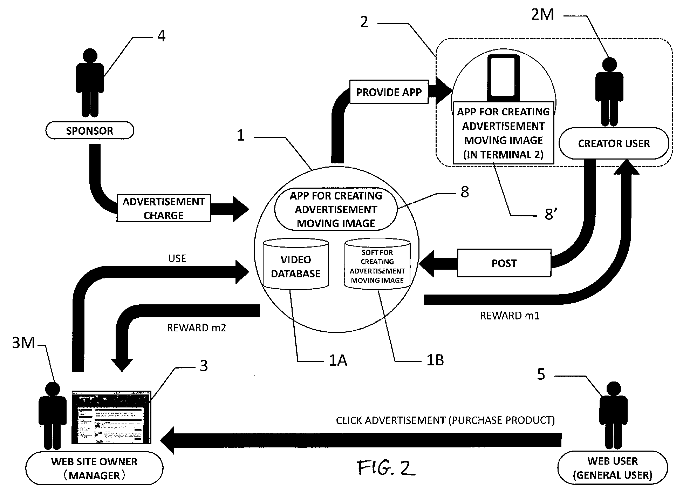

Fig. 2 illustrates a second embodiment of the invention.

In this embodiment, a specific execution method is provided compared to the system in the first embodiment.

An app 8 for creating the advertisement material provided to the creator user is stored in the server 1 of the central dealer. In a case where the Web user agrees with the central dealer on the creator user, the app is downloaded as an app 8' for creating the advertisement material to the terminal 2 of the Web user. Further, the terminal 2 may be any type of devices such as a portable terminal (a so-called smart phone), a notebook computer, and a desktop personal computer. Hereinafter, the description will be made about a portable terminal such as the smart phone.

Various types of functions can be considered for the app 8', and an image generation engine (software for generating an image) and an upload function of uploading a moving image as the advertisement material may be said as a main function, and a style determining function may be included as needed. Among them, the style determining function is a function of determining a feeling of the created moving image. For example, there are a function of making a romantic mood as a whole by applying a soft focusing effect to the pickup image, and a function of causing suspense in the image by applying a solarization effect. However, the style determining function may be a dedicated function of the server 1 without being contained in the app of the creator user. In this case, a raw moving image of the advertisement material is uploaded from the terminal 2 of the creator user. In addition, since the changing of the uploaded raw material to be a specific style may correspond to a modification of a work, it is desirable that the central dealer and the creator user agree about such a case.

As described above, the advertisement material moving images uploaded from the creator users are stored in a database 1A of the server 1. As a storge method, for example, there is considered a method of tagging the respective uploaded material images and grouping the relevent videos. In addition, there may be stored other tags (meta tag/meta information) such as a keyword for automatically creating the advertisement moving image.

An advertisement moving image creating software 1B is mounted in the server 1.

While described in detail below in a third embodiment, the advertisement moving image is created as follows.

The server 1 selects predetermined uploaded moving images from the database 1A in correspondence with request details of the sponsor 4, and automatically generates one clip of moving image by connecting the respective moving images. At this time, an effect and a transition are added to increase continuity of the one clip of moving image, a visual effect, and an appeal effect. Herein, the effect means an image producing effect such as color tone or focus, and the transition means an image transition effect such as the previous image is faded out to show a transition to the next image or the previous image is turned over like a page to show a transition to the next image.

### Third Embodiment

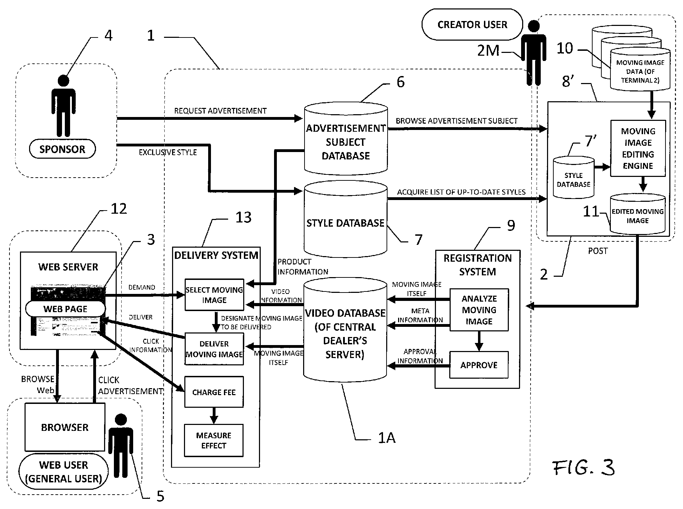

Fig. 3 illustrates a third embodiment of the invention.

First, the sponsor 4 asks the central dealer about the content of a desired publicity/advertisement (that is, an advertisement subject). The request details are stored in an advertisement subject database 6 of the server 1. As an example of the stored content of the advertisement subject, an advertisement concept such as "a brand new light beer is targeted to young men and women, and particularly can be bought at leisure time with a fresh sense" of the sponsor 4 (a beer company) is desirably stored as a content which is understandable to a third person, or particularly to the creator user 2M. The advertisement subject database 6 is accessible by the respective creator users 2M.

The sponsor 4 may designate the expression (style) of a feeling of the advertisement moving image. In addition, the style may be determined by the creator user 2M using imagination, who browses the advertisement subject. The style is also accumulated as a style database 7. In addition, the style database 7 is also accessible by the creator user 2M.

On the other hand, the creator user 2M accesses the advertisement subject database 6 using the app 8' installed in the terminal 2 of the creator user. In a case where there is an advertisement subject suitable to personality and capability (such as interest, preference, or expert field) of the creator user, the creator user creates the advertisement material moving image using the images corresponding to the advertisement subject. As a method of acquiring the moving image material, there are various methods such as a method of selecting the moving image material from among the moving images 10 stocked in the terminal 2 of the creator user or a method of newly capturing a moving image matched to the creative image of the creator user. Further, it is desirable that the creator user access the style database 7 of the server 1 before creating the advertisement moving image, and download up-to-date style data as a style 7' in the app in the terminal 2.

In this way, the creator user 2M creates the advertisement material moving image which is matched to his/her sensitivity and also can appeal to a third person using his/her own terminal 2. When the creator user 2M satisfies an edited moving image 11 and decides to upload the moving image, the creator user 2M uploads the created moving image to the server 1.

The uploaded advertisement material moving image is subjected to an image analysis in a registration system 9 of the server 1 for the checking of propriety thereof. In other words, the propriety is checked based on a premise that the moving image is widely published as an advertisement. Specifically, as a result of the image analysis, it is considered that an antisocial moving image containing a content which is contrary to public order or morality (for example, a violent content, an indecent content, etc.), and a moving image having an unclear meaning as an image are determined as an inappropriate image.

An uploaded moving image approved of suitability through such a process is stored in the meta video database 1A as an advertisement moving image. At this time, besides the registered information of the advertisement moving image itself, meta information such as a field of the image, a style, an address of the terminal 2, and approval information are also output from the registration system 9 and stored.

Further, while not illustrated in Fig. 3, it is also possible to associate a plurality of uploaded moving images registered in the server 1 to create a series of advertisement moving images, and to store the created advertisement moving images in the database 1A as illustrated in Fig. 2.

It is considered that the advertisement moving image to be published in the Web site is selected by some of procedures and methods.

First, the following procedure may be considered as a first method.

When the owner 3M of the Web site 3 issues an advertisement display request to the server 1 through a Web server 12 , a delivery system 13 of the server 1 selects one of the moving images published in the database 1A and delivers the selected moving image to the Web site 3. More specifically, when a delivery advertisement moving image is determined, the subject advertisement moving image is delivered to the Web site 3 based on a premise of agreements on predetermined items such as a settlement method as described above. Further, some methods of charging a fee (the publishing fee) on the advertisement moving image may be considered as described above. In the configuration of the drawing, there is illustrated a method of charging the publishing fee according to the number of clicks made by a Web user 5 on the advertisement moving image published in the Web site.

In addition, the server 1 may provide the following service. In other words, in a case where the manager (owner) 3M of the Web site 3 requests a use state of the Web site 3 based on a premise that the Web site 3 performs an advertisement display request, the server 1 may provide a service of transmitting the data (age, gender, job, browsing date of the Web, browsing time of the Web user 5) on the use state of the Web site 3 to the manager 3M of the Web 3.

Anothermethod of selecting the advertisement moving image is as follows.

The manager 3M of the Web site 3 actively selects the advertisement moving image based on the data on the use state of the Web site which is obtained through the service of the server 1 or a personal investigation of the manager.

In other words , a sample of the advertisement moving image is posted in the delivery system 13, and the manager 3M retrieves an advertisement moving image suitable to the Web site 3 of the manager with reference to the data such as the use state.

When a desired advertisement moving image to be published is determined, as described below, the server 1 delivers the desired advertisement moving image of the Web site owner 3M to the Web site 3 based on a premise of agreements on predetermined items such as a settlement method. Further, some methods of charging a fee (the publishing fee) on the advertisement moving image may be considered as described above. In the configuration of the drawing, there is illustrated a method of charging the publishing fee according to the number of clicks made by a Web user 5 on the advertisement moving image published in the Web site.

Hitherto, the system according to the invention has been described using an example of the moving image, but the invention may be, of course, implemented even in a case where the still image is a target.

### Industrial Applicability

In a field other than the above description, the present system may be applied to a design competition corresponding to a specific concept in a case where the Web user is a construction designer for example.

### Reference Signs List

1 (central dealer's) server
1A video database (of central dealer's server)
1B soft for creating advertisement moving image (of central dealer's server)
2 (creator user's) terminal
2M creator user
3 Web site
3M Web site owner (manager)
4 sponsor
5 Web user (general user)
6 advertisement subject database
7 style database
7' style data (in terminal 2)
8 app for creating advertisement moving image
8' app for creating advertisement moving image (in terminal 2)
9 registration system
10 moving image data (of terminal 2)
11 edited moving image
12 Web server
13 delivery system

FIG. 1
   - 1: PROVIDE APP (FOR FREE)
   - 2: POST
   - 3: CLICK ADVERTISEMENT (PURCHASE PRODUCT)
   - 22: REQUEST & REWARD m3
   - 23: USE
FIG. 2
   - 1: PROVIDE APP
   - 2: POST
   - 3: CLICK ADVERTISEMENT (PURCHASE PRODUCT)
   - 23: USE
   - 24: REWARD m1
   - 24: REWARD m2
FIG. 3
   - 2: POST
   - 4: REQUEST ADVERTISEMENT
   - 5: BROWSE ADVERTISEMENT SUBJECT
   - 6: SELECT MOVING IMAGE
   - 7: DELIVER MOVING IMAGE
   - 8: CHARGE FEE
   - 9: MEASURE EFFECT
   - 10: BROWSER
   - 11: BROWSE Web
   - 12: CLICK ADVERTISEMENT
   - 13: MOVING IMAGE EDITING ENGINE
   - 14: ANALYZE MOVING IMAGE
   - 15: APPROVE
   - 16: ACQUIRE LIST OF UP-TO-DATE STYLES
   - 17: PRODUCT INFORMATION
   - 18: DESIGNATE MOVING IMAGE TO BE DELIVERED
   - 19: MOVING IMAGE ITSELF
   - 19: MOVING IMAGE ITSELF
   - 20: META INFORMATION
   - 20: EXCLUSIVE STYLE
   - 21: APPROVAL INFORMATION

## Claims

1. A user participation type electronic advertisement system which is established between a server of a central dealer, a Web server, and a terminal of a Web user, and creates and delivers an advertisement published in an information communication network system such as the Internet, wherein
the server of the central dealer provides an application software for creating an advertisement material moving image to the terminal of the Web user who provides the advertisement material moving image,
the Web user who receives the application software uploads the advertisement material moving image created using the application software as a creator user to the server of the central dealer, and
the server of the central dealer uses the uploaded advertisement material moving image as an advertisement moving image without any change or creates a series of advertisement moving images from a plurality of advertisement material moving images, and delivers a desired advertisement moving image of a Web owner who wants to publish an advertisement to the Web server of the Web owner.

2. The user participation type electronic advertisement system according to claim 1, wherein
the server of the central dealer includes a database which accumulates an advertisement subject asked by a sponsor, and
the database is accessible by the terminal of the creator user.

3. The user participation type electronic advertisement system according to claim 1 or 2, wherein
the server of the central dealer includes a database which accumulates a display style of the advertisement moving image, and
the database is accessible by the terminal of the creator user.

4. The user participation type electronic advertisement system according to any one of claims 1 to 3, wherein
the server of the central dealer includes a registration system, and
the registration system is configured to perform an image analysis on the advertisement material moving image uploaded from the server of the creator user and to accumulate the advertisement material moving image approved for a registration into the advertisement moving image database.

5. The user participation type electronic advertisement system according to any one of claims 1 to 4, wherein
the server of the central dealer is provided with a delivery system, and
the delivery system is published with a sample of the advertisement moving image which a Web owner is able to browse through the Web server.

6. The user participation type electronic advertisement system according to any one of claims 1 to 5, wherein
the server of the central dealer is provided with a payment system, and
the payment system is configured to notify the user of payment of a settlement charge through the terminal of the creator user who uploads the advertisement material moving image employed as an advertisement.

7. The user participation type electronic advertisement system according to claim 6, wherein
the server of the central dealer is provided with a payment system, and
the payment system is configured to notify the user of payment of a settlement charge through the server of a Web site which publishes the advertisement moving image.
